Europäisches Patentamt

European Patent Office

Office européen des brevets

(11) Veröffentlichungsnummer: **0 355 615**
**A2**

(12) # EUROPÄISCHE PATENTANMELDUNG

(21) Anmeldenummer: 89114876.9

(51) Int. Cl.⁴: **C08L 81/02 , C08K 3/04**

(22) Anmeldetag: 11.08.89

(30) Priorität: 24.08.88 DE 3828696

(43) Veröffentlichungstag der Anmeldung:
28.02.90 Patentblatt 90/09

(84) Benannte Vertragsstaaten:
**BE DE FR GB IT**

(71) Anmelder: **BAYER AG**

**D-5090 Leverkusen 1 Bayerwerk(DE)**

(72) Erfinder: **Dziurla, Hans-Jürgen, D.I.**
**Solinger Strasse 35**
**D-5090 Leverkusen(DE)**
Erfinder: **Reinking, Klaus, Dr.**
**Robert-Stolz-Strasse 16D**
**D-5632 Wermelskirchen(DE)**
Erfinder: **Wehnert, Wolfgang, Dr.**
**Bodelschwinghstrasse 14**
**D-4150 Krefeld 1(DE)**
Erfinder: **Tresper, Erhard, Dr.**
**Moerser Strasse 394**
**D-4150 Krefeld 1(DE)**

(54) **Elastomermodifizierte, kohlenstoffhaltige Polyarylensulfidabmischungen.**

(57) Die Erfindung betrifft leitfähige Abmischungen aus Polyarylensulfiden (PAS), vorzugswiese Polyphenylensulfid (PPS) mit Kautschuken, leitfähigem Ruß und Graphit.

EP 0 355 615 A2

EP 0 355 615 A2

## Elastomermodifizierte, kohlenstoffhaltige Polyarylensulfidabmischungen

Die Erfindung betrifft leitfähige Abmischungen aus Polyarylensulfiden (PAS), vorzugsweise Polyphenylensulfid (PPS) mit Pfropfpolymeren, leitfähigem Ruß und Graphit.

Polyarylensulfide und ihre Herstellung sind bekannt, z.B. US-PS 3 354 129, EP-OS 171 021.

Polyarylensulfide mit Füllstoffen, z.B. leitfähigem Ruß abzumischen ist ebenfalls bekannt (z.B. US-PS 354 129, JP-OS 161 960) Diese Abmischungen von Polyarylensulfiden mit leitfähigem Ruß zeichnen sich durch niedrige elektrische Widerstände aus. So konnte z.B. an gespritzten Platten aus Polyarylensulfid, die 30 Gew.-% leitfähigen Ruß enthielten, ein spezifischer Durchgangswiderstand von 300 Ohm·cm gemessen werden (JP-OS 161,960).

Eine weitere Verringerung der elektrischen Widerstände durch Erhöhung der Rußkonzentration ist prinzipiell möglich, in der Praxis jedoch nur aufwendig durchführbar.

Die nur mit leitfähigem Ruß erreichbaren elektrischen Widerstände sind für eine Vielzahl von technischen Anwendungen, z.B. Niederspannungsheizelemente (bis 42 V) zu hoch.

Ein weiterer Nachteil derartiger Abmischungen ist, daß zur Herstellung von gespritzten Formkörpern diesen Abmischungen Entformungshilfen zugesetzt werden sollen.

Durch die Zugabe von Entformungshilfen können aber die mechanischen Eigenschaften wie z.B. Zug- u. Biegefestigkeit, Zähigkeit und Randfaserdehnung negativ beeinflußt werden.

Es wurde nun gefunden, daß Mischungen aus Polyarylensulfiden, vorzugsweise Polyphenylensulfid mit 1 -60 Gew.-%, vorzugsweise 10 - 20 gew.-% eines Pfropfpolymeren, vorzugsweise Acrylatpfropfpolymere deutlich niedrigere elektrische Widerstände aufweisen als vergleichbare Mischungen ohne diese Pfropfpolymere.

Diese Pfropfpolymere, vorzugsweise Acrylatpfropfpolymere verbessern die Fließfähigkeit und begünstigen dadurch die Dispergierung des zugesetzten Kohlenstoffs (Ruß/Graphit).

Gegenstand der Erfindung sind Abmischungen aus

a) 20 - 82 Gew.-% Polyarylensulfid, vorzugsweise Polyphenylsulfid,

b) 4 - 60 Gew.-% Leitruß,

c) 4 - 60 Gew.-% Graphit,

d) 1 bis 60, vorzugsweise 5-60, besonders bevorzugt 10 bis 20 Gew.-Teile eines Pfropfpolymerisats aus

(A) 25 bis 95 Gew.-Teilen eines Copolymerisats von

(a) 75 bis 99,8 Gew.-Teilen eines $C_1$-$C_6$-Alkylacrylats

(b) 0,1 bis 5 Gew.-Teilen eines Monomeren mit mindestens 2 nichtkonjugierten olefinischen Doppelbindungen und

(c) 0 bis 40 Gew.-Teilen weiterer Monomerer

(B) 75 bis 5 Gew.-Teilen eines durch Polymerisation mindestens eines olefinischen ungesättigten Monomeren erhaltenen Harzes, das in Gegenwart von (A) hergestellt worden ist, wobei die Summe der Gewichtsanteile der Komponenten a) + b) + c) + d) jeweils 100 Gew.-% ist.

Die geringe Ruß- und Graphit-Konzentration der Mischung hat erhebliche Vorteile z.B. bei der Herstellung dieser Abmischungen. Die Mischungen haben gute mechanische Kennwerte.

Erfindungsgemäß geeignete Ruße sind z.B. Gasruße, Furnaceruße, Flammruße. Sie haben mittlere Primärpartikelgrößen im Durchmesser von 5 bis 200 Nanometer (nm), vorzugsweise 10 bis 100 nm und insbesondere 15 bis 50 nm.

Die BET-Oberflächen der erfindungsgemäß geeigneten Ruße ist größer als 20 m²/g. Ihre Dibutylphthalat(DBP)-Adsorption ist größer als 40 ml/100 g Ruß.

Erfindungsgemäß geeignete Ruße sind beispielsweise handelsübliche Leitruße wie z.B. Cabot Black Pearl 2000®, Cabot Vulcan XC 72® und 72 R®, Cabot Vulcan P®, Phillips XE 2®, Ketjen Black EC 600®, feingemahlenes Koks, usw..

Erfindungsgemäß geeignete Graphite sind Graphitpulver, Graphitfasern oder Graphitstäube, die beispielsweise als Elektrodengraphit in einem breiten Kornspektrum mit Partikeldurchmessern bis zu 5 mm handelsüblich sind. Bevorzugt werden Graphitpulver mit mittlerer Teilchengröße (Durchmesser) bis zu 1 mm, bevorzugt bis 0,5 mm verwendet.

Die Pfropfpolymerisate werden durch Polymerisation von olefinisch ungesättigten Monomeren in Gegenwart des Prepolymere (A) erhalten, wobei ein wesentlicher Teil der Monomeren auf das Prepolymer A) aufgepfropft wird. Die Herstellung derartiger Pfropfpolymerisate ist im Prinzip bekannt (z.B. R.J. Ceresa, Block and Graft Copolymers, Butterworth, London, 1962).

2

Erfindungsgemäß werden pfropfpolymerisate bevorzugt, die kautschukeleastische Eigenschaften besitzen und deren Glasübergangstemperatur unterhalb von +10° C insbesondere von -150° bis -20° C, vorzugsweise von -80 bis -30° C, liegt. Die Ermittlung der Glasübergangstemperatur kann dabei nach B. Vollmert, Grundriß der Makromolekularen Chemie, Seiten 406-410, Springer-Verlag, Heidelberg, 1962, erfolgen.

Bevorzugtes $C_1$-$C_6$ Alkylacrylat (a) ist n-Butylacrylat.

Besonders bevorzugte Pfropfpolymerisate lassen sich nach üblichen Emulsionspolymerisationsverfahren in mehreren Stufen aus n-Butylacrylat, 1,3-Butylendiacrylat und Diallylmaleat in erster Stufe und Methylmethacrylat in zweiter Stufe herstellen, wobei das bevorzugte Monomerverhältnis (bezogen auf Gewicht) etwa 79,2/0,4/20,0 beträgt.

Bevorzugte Monomere (b) mit mindestens zwei nicht konjugierten Doppelbindungen pro Molekül sind Polyacryl- und Polymethacrylsäureester von mehrwertigen Alkoholen, insbesondere solchen mit 2 bis 8 C-Atomen und 2 bis 4 Hydroxylgruppen, z.B. Butylendiacrylat und -dimethylacrylat, Trimethylolpropantrimethacrylat; Di- und Trivinylbenzol, Vinylacrylat und -methacrylat; Alkylester ungesättigter Mono- und Dicarbonsäuren wie z.B. Alkyl acrylat und -methacrylat, Dialkylmaleat, -fum,arat und -itaconat, Msalein-, Fumar- und Itaconsäuremonoalkylester; Dialkylester von Polycaronsäuren, die keine polymerisationsfähige Doppelbindung enthalten.

Besonders bevorzugte Monomere (b) sind Butylendiacrylat, Allylmethacrylat und Diallylmaleat.

Bevorzugte Monomere (c) sind Ethylen, Isopren, Vinylether, Butadien, Styrol, Vinylester, Vinylhalogenide, vinylsubstituierte heterocyclische Verbindungen wie Vinylpyrrolidon, Acrylnitril und Mischungen dieser Monomeren.

Bevorzugte olefinisch ungesättigte Monomere zur Herstellung des Anteils (B) sind $C_1$-$C_4$-Alkylacrylate und -methacrylate, Styrol und Acrylnitril. Vorzugsweise enthalten diese zur Herstellung des Anteils (B) verwendete Monomeren mindestens 50 Gew.-% $C_1$-$C_4$-Alkylmethacrylat.

Es ist vorteilhaft, wenn die Pfropfpolymerisate einen beträchtlichen Gehalt an polaren Gruppen aufweisen. Zweckmäßig wählt man Produkte aus, die zu mehr als 10 Gew.-% aus (Meth)-Acrylsäureestern und (Meth)-Acrylnitril aufgebaut sind. Sofern der Gehalt an (Meth)-Acrylestern mehr als 70 Gew.-% beträgt, verzichtet man zweckmäßig auf (Meth)-Acrylnitril als Baustein.

Bevorzugte Pfropfpolymerisate sind solche aus

60-95 Gew.-% Pfropfgrundlage und

40-5 Gew.-% Pfropfauflage, wobei die Pfropfgrundlage aus einem Monomerengemisch enthaltend

95-99,8 Gew.-% Butylacrylat,

0,1-2,5 Gew.-% butylendiacrylat und

0,1-2,6 Gew.-% Allylmethacrylat oder Diallylmaleat und die Pfropfauflage zu

60-100 Gew.-% aus Methylmethacrylat und

40-0 Gew.-% anderer Monomerer

erhältlich sind.

Die bevorzugten Pfropfpolymerisate besitzen einen mittleren Teilchendurchmesser $d_{50}$ (gemessen mittels Ultrazentrifuge nach W. Sholtan, H. Lange, Kolloid, Z.u.Z. Polymere 250, 782-796 (1972) von 0,2 bis 0,6 vorzugsweise 0,3 bis 0,5 μm.

Die Herstellung der Prepolymeren und die der Pfropfpolymerisate erfolgt in üblicher Weise, vorzugsweise durch Emulsionspolymerisation mit üblichen radikalischen Initiatoren, Emulgatoren und Reglern in wäßriger Emulsion bzw. Dispersion. Die Herstellung geeigneter Pfropfpolymerisate ist biespielsweise in den DE-PS 1 260 135 und 1 238 207 beschrieben.

Die erfindungsgemäßen Abmischungen können gegebenenfalls weitere übliche Füll- und Verstärkungsstoffe, beispielsweise Aramidfasern, Kohlefasern, Glasfasern oder andere anorganische Zusatzstoffe wie Talkum, Quarz, Glimmer, Kreide, Pigmente usw., die gegebenenfalls auf übliche Art vorbehandelt sein können, enthalten. Es können bis zu 200 Gew.-%, bezogen auf die Summe des Gewichts der Komponenten a) + b) + c) + d) zugesetzt werden.

Ein weiterer Vorteil der erfindungsgemäßen Abmischungen ist, daß zur Herstellung von gespritzten Formkörpern aus diesen Abmischungen keine der üblichen, beispielsweise wachsartigen Entformungshilfen zugegeben werden muß.

Formkörper aus den erfindungsgemäßen Abmischungen zeichnen sich durch ein deutlich besseres mechanisches Niveau, z.B. Zähigkeit, Randfaserdehnung, Biegefestigkeit, Elastizität usw. aus.

Die Herstellung der erfindungsgemäßen Abmischungen aus Polyarylensulfiden, leitfähigem Ruß, Graphit und thermoplastischem Kautschuk und gegebenenfalls anderen Füll- und Verstärkungsstoffen kann nach bekannten Compoundierungsverfahren, z.B. auf Einschnecken oder Mehrschneckenextrudern, z.B. ZSK-Maschinen oder geeigneten Knetern, z.B. Buss-Ko-Knetern, vorzugsweise auf Maschinen mit Entgasungseinrichtung oder über geeignete Agglomerationsverfahren, z.B. Palkmann-und/oder Condux-Agglomeratoren, erfolgen.

Außerdem ist es möglich, die erfindungsgemäßen Abmischungen als Pulverabmischungen herzustellen. Pulvermischungen können z.B. auf Konusschnecken-Mischern, Taumel-Mischern, Turbinen-Mischern, Rhönrad-Mischern oder ähnlichen Mischern hergestellt werden.

Die erfindungsgemäßen Abmischungen können zu Formteilen, Halbzeugen, Folien oder Fasern verarbeitet werden.

Je nach den eingestellten elektrischen Widerständen und der Art der verwendeten Füll- und Verstärkungsstoffe, z.B. Metallfasern, Flakes oder Pulvern und/oder Kombinationen aus diesen können Formkörper aus den erfindungsgemäßen Abmischungen als elektrische Widerstandsheizelemente, als Ableiter elektrischer Ladungen (z.B. Schutz vor Elektrostatik) oder zur Abschirmung von elektromagnetischen Wellen eingesetzt werden.

Beispiele

1. Vergleich: Compound ohne thermoplastischen Kautschuk
Polyphenylensulfid hergestellt nach EP-OS 171 021 40,0 Gew.-%
Leitruß Cabot Vulcan XC 72® 20,0 Gew.-%
Graphit (Fa. Merck) 10,0 Gew.-%
Glimmer 30,0 Gew.-%
spez. Oberflächenwiderstand (nach DIN 53 596, VDE 0303, Teil 3, Potentialmethode) $\rho_S$ = 49,0 Ohm
spez. Durchgangswiderstand (nach DIN 53 596. VDE 0303, Teil 3, Potentialmethode) $\rho_D$ = 2,1 Ohm $\cdot$ cm
2. Polyphenylensulfid, hergestellt nach EP-OS 171 021 0 Gew.-%
Leitruß Cabot Vulcan CX 72® 10,0 Gew.-%
Graphit (Fa. Merck) 5,0 Gew.-%
Glasfasern 20,0 Gew.-%
Acrylkautschuk Paraloid KM 330 13,0 Gew.-%
spez. Oberflächenwiderstand (nach DIN 53 596, VDE 0303, Teil 3, Potentialmethoden $\rho_S$ = 65 Ohm
spez. Durchgangswiderstand (nach DIN 53 596. VDE 0303, Teil 3, Potentialmethoden $\rho_D$ = 3,7 Ohm $\cdot$ cm
3. Polyphenylensulfid, hergestellt nach EP-OS 171 021 64,0 Gew.-%
Leitruß Cabot Vulcan XC 72® 10,0 Gew.-%
Graphit (Fa. Merck) 5,0 Gew.-%
Glimmer 5,0 Gew.-%
Acrylkautschuk Paraloid KM 330® 16,0 Gew.-%
spez. Oberflächenwiderstand (nach DIN 53 596, VDE 0303, Teil 3, Potentialmethode) $\rho_S$ 92 Ohm
spez. Durchgangswiderstand (nach DIN 53 596 $\rho_D$ 37 Ohm $\cdot$ cm

| Mechanische Kennwerte | | | | |
|---|---|---|---|---|
| | Norm | Beispiel | | |
| Prüfmethode | | 1 | 2 | 3 |
| Biegefestigkeit N/nm² | | 95 | 145 | 93 |
| Randfaserdehnung bei % Höchstkraft | | 0,76 | 1,9 | 2,9 |
| Schlagzähigkeit KJ/m² | | 14 | 24,6 | 19 |

**Ansprüche**

1. Leitfähige Abmischungen aus
a) 20 - 82 Gew.-% Polyarylensulfid,
b) 4 - 60 Gew.-% Leitruß,
c) 4 - 60 Gew.-% Graphit,
d) 1 - 60 Gew.-% Pfropfpolymerisat,

wobei die Summe der Gewichtsanteile der einzelnen Komponente a) + b) + c) + d) 100 Gew.-% ist und gegebenenfalls weitere übliche Füll- und Verstärkungsstoffe.

2. Mischungen nach Anspruch 1, dadurch gekennzeichnet, daß als Polyarylensulfid Polyphenylensulfid eingesetzt wird.

3. Abmischungen nach Anspruch 1, dadurch gekennzeichnet, daß als Pfropfpolymerisat Kautschuke wie ein Acrylkautschuk eingesetzt werden.

4. Abmischungen nach Anspruch 1, dadurch gekennzeichnet, daß sie als Füllstoff Metallfasern, -flakes oder -Pulver enthalten.

5. Verwendung der Abmischungen nach Anspruch 1 zur Herstellung von Formkörpern, Fasern, Folien.